# EUROPEAN PATENT SPECIFICATION

(11) **EP 3 921 915 B1**
(45) Date of publication and mention of the grant of the patent: **01.01.2025**
(21) Application number: 20701365.7
(22) Date of filing: 28.01.2020
(51) Int. Cl.: H02J 7/00, H02J 13/00

(54) **NETWORK DEVICE MANAGEMENT**
NETZWERKGERÄTE-MANAGEMENT
DISPOSITIF DE GESTION DE RESEAU

(30) Priority: 06.02.2019 EP 19155777
(43) Date of publication of application: 15.12.2021
(73) Proprietor: British Telecommunications Public Limited Company, London E1 8EE (GB)
(72) Inventor: ZOUALFAGHARI, Mohammad, London EC4V 5BT (GB); PUTLAND, Paul, London EC4V 5BT (GB); BROWN, Ruth, London EC4V 5BT (GB)
(74) Representative: British Telecommunications public limited company Intellectual Property Department
(86) International application number: PCT/EP2020/052047
(87) International publication number: WO 2020/160967

(56) References cited:
- EP-A2- 2 618 318
- US-A1- 2004 127 206
- US-A1- 2007 291 673
- US-A1- 2013 265 928
- US-A1- 2014 226 542
- US-A1- 2017 019 948
- US-B2- 7 760 676

## Description

### Field of Technology

The present invention relates to a method of retrieving status information from a telecommunications device via a wireless telecommunications network and to a telecommunications network therefor.

### Background

The 'Internet of Things' is likely to introduce a very large number of remote, battery-powered devices that wirelessly communicate with telecommunications networks. Such devices include, for example, smart meters, implantable (medical) devices and smart thermostats.

Given that these such devices may often be located in remote and/or relatively difficult-to-access locations, as well as the potentially high numbers of devices, it is desirable that they report their status, and that this is performed via wireless communication. However, for the same reasons, it is also desirable to maximise battery life to avoid having to replace batteries/devices frequently. As a result, there is a conflict between balancing battery life and having accurate and sufficiently up-to-date status information from such devices.

It is an aim of the present invention to at least alleviate some of the aforementioned problems.

US2014226542 discloses an apparatus and method for initiating discontinuous reception (DRX) operation in a user equipment (UE), in which applications running on the UE are monitored by the UE to identify one or more inactivity trigger events associated with the application(s). The UE includes an application-radio cross layer to process the application information, including the in activity trigger event, for use by a radio layer. The radio layer of the UE determines initiation of the DRX operation in accordance with the application information, including the inactivity trigger event, provided by the application-radio cross layer and device characteristics information.

US2013265928 discloses a new discontinuous reception (DRX) parameter change that may be received in user equipment while the user equipment is using an existing DRX parameter. The user equipment continues to use the existing parameter and determines when a new discontinuous reception cycle is starting. The change to the next discontinuous reception parameter is implemented in the new discontinuous reception cycle.

US2007291673 discloses a dynamic, adaptive discontinuous reception (DRX) period based on available battery power of a mobile device. A mobile device can be assigned a DRX period based on a battery power level of the mobile device, and the assigned DRX period can be dynamically changed to reflect changes to the battery power level. In one embodiment, the mobile device initiates changes to the DRX period.

EP2618318 discloses an alarm that includes a battery power supply; a sensor section that outputs an anomaly detection signal in the case of detecting an anomaly; an alert section that outputs an alarm based on the anomaly detection signal; a reception circuit section that discontinuously receives an event signal from another alarm device at every predetermined reception cycle; a transmission circuit section that transmits an event signal to the other alarm device in a transmission time that is at least the predetermined reception cycle; an anomaly monitoring section that, when the sensor section has detected an anomaly, causes the alert section to output the anomaly alarm based on the anomaly detection signal and causes the transmission of an event signal relating to the anomaly of the alarm device to the other alarm device by the transmission circuit section, and on the other hand, when the reception circuit section has received from the other alarm device an event signal relating to an anomaly of the other alarm device, causes the alert section to output the anomaly alarm; and a low battery monitoring section that, upon detecting a voltage drop of the battery power supply, causes a low battery alarm of the alarm device to be output by the alert section, and stops the transmission and reception of event signals in the transmission circuit section and the reception circuit section

Document US 2017/019948 is another example of prior art.

### Statements of Invention

According to a first aspect of the present invention, there is provided a method of retrieving status information according to Claim 1.

In this way, improved energy conservation may be achieved, as well as an energy-efficient manner of triggering and configuring the retrieval of status information. Furthermore, the invention may also help conserve network bandwidth, up-time and capacity, for example, by reducing the number of active devices.

Preferably, as used herein the term "discontinuous reception" includes a state in which a telecommunications device utilises scheduled periods, of a predefined length, of inactivity and activity with respect to its interaction with the wireless telecommunications network, at least so as to conserve power and/or reduce network signalling, and preferably includes Discontinuous Reception (DRX), extended Discontinuous Reception (eDRX), Polling and Power Save Mode (PSM).

Optionally, the method further comprises the step of triggering, by the telecommunications device, the change in discontinuous reception. Preferably, the telecommunications device remains registered with said telecommunications network whilst the telecommunications device is in the discontinuous reception mode.

Preferably, the step of retrieving status information is performed in response to detecting the change in discontinuous reception. Optionally, the step of communicating the retrieved status information is performed in response to retrieving the status information. Preferably, the change in discontinuous reception is initiation of discontinuous reception.

Preferably, the change in discontinuous reception is cessation of discontinuous reception. Optionally, a change to or from the discontinuous reception mode is performed (or initiated) by the wireless telecommunications network. Preferably, the change in discontinuous reception is completion of a predefined number of discontinuous reception cycles. Preferably, as used herein a "discontinuous reception cycle" is a repeating unit of the scheduled periods, of a predefined length, of inactivity and activity by the telecommunications device. Optionally, the change is exceeding a predefined duration in discontinuous reception. Preferably, the change in discontinuous reception is reconfiguration of the discontinuous reception. Optionally, reconfiguration of the discontinuous reception is: a change in the duration of a discontinuous reception cycle; a change in the duration in which the telecommunications device is to remain in discontinuous reception; and/or a change in type of discontinuous reception.

Preferably, a method according to any preceding claim, wherein the change in discontinuous reception is performed at a predefined frequency. Optionally, the frequency is predefined by the telecommunications device and/or by the wireless telecommunications network.

Preferably, communicating the retrieved status information is performed on every occasion of the change in discontinuous reception. Optionally, retrieving the status information is performed on every occasion of the change in discontinuous reception. Optionally, retrieving the status information and/or communicating the retrieved status information is performed at non-sequential occasions of the change in discontinuous reception. Optionally, the step/s of retrieving the status information and/or communicating the retrieved status information is/are repeated a predefined number of times, and more preferably regardless of a subsequent change in change in discontinuous reception occurring during repetition of said steps.

Preferably, as used herein, said "without interaction" connotes without sending or receiving a telecommunications signal, in particular a wireless telecommunications signal. Preferably, the status information is retrieved without interaction with a wide area network (such as a cellular network). Optionally, the status information is retrieved only by means of wired communication. Optionally, the status information is retrieved whilst the telecommunications device is in discontinuous reception. Optionally, the telecommunications device comprises a transceiver for communicating with the wireless telecommunications network and/or a telecommunications network, and wherein the status information is retrieved whilst the transceiver is inactive.

Preferably, the telecommunications device comprises a sensor, and wherein the status information is a reading from the sensor. Optionally, the sensor is (and the status information therefore pertains to readings from): a geographic, position, orientation and/or navigation sensor; a mechanical sensor, including a pressure, flow, strain and kinematic sensor; a thermal sensor; a chemical sensor; an optic sensor; a proximity and/or presence sensor; an electric and/or magnetic sensor, including a battery level sensor; and/or an acoustic sensor. Optionally, the status information is data from memory in the telecommunications device, and for example: a software version; hardware specifications; and/or operational information.

Preferably, the telecommunications device compares the retrieved status information to a predefined value and then communicates the retrieved status information to the wireless telecommunications network in dependence on the comparison of retrieved the status information to said value. Optionally, the telecommunications device communicates the retrieved status information to the wireless telecommunications network in dependence on the retrieved status being equal to, less than and/or greater than said value. Optionally, the value is a threshold value. Optionally, the value is stored in the telecommunications device. Optionally, the value is reconfigurable by means of the telecommunications device and/or by means of a network communication from the, or a, wireless telecommunications network. Optionally, the value is a battery level.

Preferably, the method further comprises the step of preventing the telecommunications device from retrieving the status information and/or communicating the retrieved status information to the wireless telecommunications network if status information has previously been communicated by the telecommunications device to the wireless telecommunications network within a predefined time window. Optionally, the time window is predefined and may be reconfigurable by the telecommunications device and/or by the wireless telecommunications network.

Preferably, the retrieved status information is communicated to the wireless telecommunications network whilst the telecommunications device is in discontinuous reception. Preferably, the retrieved status information is communicated in a network communication, between the telecommunications device and the wireless telecommunications network, for changing discontinuous reception, and more preferably by means of a message compliant with a Radio Resource Control protocol. Preferably, the retrieved status information is communicated to the wireless telecommunications network as part of a field of the network communication that is not intended to communicate said retrieved status information, but which field is predefined (and redefined) amongst - and therefore unambiguously intelligible to - the telecommunications device and the wireless telecommunications network as communicating the status information (rather than the original significance of the field). Optionally, the field is a gateway number.

Preferably, the retrieved status information is communicated to the wireless telecommunications network whilst the telecommunications device has ceased discontinuous reception. Preferably, the telecommunications device emerges from discontinuous reception (if not already having done so) in response to communicating the retrieved status information to the wireless telecommunications network.

Preferably, the method further comprises the step of the telecommunications device performing an operation if the retrieved status information is equal to, less than or greater than a predefined value. Preferably, said operation is performed without interaction with the, or a, wireless telecommunications network. Preferably, said operation is performed without the telecommunications device operating a transceiver for communicating with the wireless telecommunications network. Preferably, the operation is to power down the telecommunications device; perform a software update; reconfigure the telecommunications device and/or change an operating parameter of the telecommunications device; perform further retrieval of status information from the telecommunications device; and/or perform a mechanical and/or electrical operation.

Preferably, the method further comprises the step of communicating data from the wireless telecommunications network and/or a telecommunication network to the telecommunications device in response to the wireless telecommunications network receiving the retrieved status information. Optionally, said data may be a software update or, for synchronisation, time.

Preferably, the data is an instruction. Preferably, said instruction is communicated to the telecommunications device in response to the retrieved status information being equal to, less than or greater than a (or the aforementioned) predefined value. The instructions may be executable by the telecommunications device so as to perform an operation.

Preferably, the instruction is to: trigger a further change in discontinuous reception; power down the telecommunications device; perform a software update; reconfigure the telecommunications device and/or change an operating parameter of the telecommunications device; perform further retrieval of status information from the telecommunications device; and/or perform a mechanical and/or electrical operation.

Preferably, the wireless telecommunications network comprises: a cellular wide area network; a Long Range Wide Area Network (LoRWAN); a Low Power Wide Area Network (LPWAN); a satellite network; and/or a wireless local area network.

Preferably, the telecommunications device is a battery-powered device. The telecommunications device may only be battery powered. Preferably, the telecommunications device is integrated as part of a: smart meter and/or sensor; a vehicle; a weather station; a chemical and/or physical sensor; a security apparatus; and/or a domestic appliance.

According to another aspect of the invention, there is provided a telecommunications device according to Claim 12.

According to yet another aspect of the invention, there is provide a system for retrieving status information in relation to a telecommunications device, comprising: a wireless telecommunications network; a telecommunications device as described above.

According to a further aspect of the invention, there is provided a computer-readable storage medium comprising instructions that, when executed by a processor associated with a telecommunications device, causes the telecommunications device to perform a method as described above.

The invention extends to any novel aspects or features described and/or illustrated herein. The invention extends to methods and/or apparatus substantially as herein described and/or as illustrated with reference to the accompanying drawings. The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

In this specification the word 'or' can be interpreted in the exclusive or inclusive sense unless stated otherwise. Furthermore, features implemented in hardware may generally be implemented in software, and vice versa. Any reference to software and hardware features herein should be construed accordingly.

The invention extends to method of retrieving status information, a telecommunications device and to a system as described herein and/or substantially as illustrated with reference to the accompanying drawings. The present invention is now described, purely by way of example, with reference to the accompanying diagrammatic drawings, in which:
Figure 1 shows an example of a wireless telecommunications network;
Figures 2 and 3 show methods of retrieving status information via a wireless telecommunication network; and
Figures 4 show triggers for retrieving status information.

### Specific Description

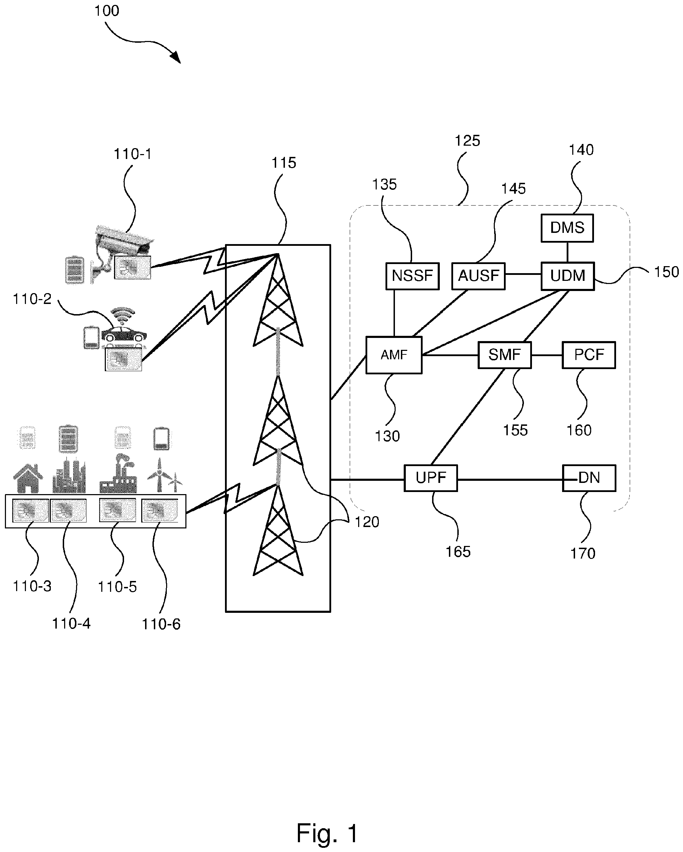

Figure 1 shows an exemplary wireless telecommunications network 100. The network 100 is a mobile cellular network comprising a plurality of telecommunications devices or ("user equipment") 110.

The telecommunications devices 110 are battery-powered devices that are configured wirelessly to communicate with the network 100, and include so-called "Internet of Things" devices, such as telecommunications devices incorporated as part of: a security and/or a surveillance apparatus 110-1; a network-enabled vehicle (in particular a semi- or fully autonomous vehicle) 110-2; a dwelling and/or domestic appliance 110-3; public spaces and/or infrastructure 110-4; industrial processing and/or manufacturing plants 110-5; and/or energy production plants and/or devices 110-6.

The network 100 includes a Radio Access Network (RAN) 115 provided by a RAN access point 120 (*e.g.* in the form of a macro-, micro-, pico- or femto-cell site), which is connected to a core 125 of the network 100. The telecommunications devices 110 are available to communicate with the network 100 by accessing the RAN 115.

The core network 125 in turn comprises the following functional components:
- Access and Mobility management Function (AMF) 130;
- Network Slice Selection Function (NSSF) 135;
- Device Management System (DMS) 140;
- AUthentication Server Function (AUSF) 145;
- Unified Data Management (UDM) 150;
- Session Management Function (SMF) 155;
- Policy Control function (PCF) 160;
- User Plane Function (UPF) 165; and
- Data Network (DN) 170.

The telecommunications devices 110 are configured to enter a Discontinuous Reception (DRX) mode, in which a telecommunications device is sent into an idle mode in terms of its interaction with the network 100; this helps conserve battery power of the device and helps reduces network signalling. The DRX mode is described in the 3^{rd} Generation Partnership Project (3GPP) Technical Specification 36.331, version 15.3.0, section 4.2, the contents of which are hereby incorporated by reference.

The DRX mode provides periods in which a telecommunications device is receptive to network communications (*e.g.,* monitors of a Physical Downlink Control CHannel (PDCCH) of the network **100), or** an "active state", and also provides periods in the telecommunications device is unreceptive to the network (*e.g.* it does not monitor the PDCCH), or an "inactive state"; these periods of active and inactive states form a DRX cycle.

The RAN access point 120 (in the form of, for example, a gNodeB or eNodeB) instructs the telecommunications devices 110 to enter the DRX mode, for example by issuing a message in accordance with Radio Resource Control (RRC) protocols.

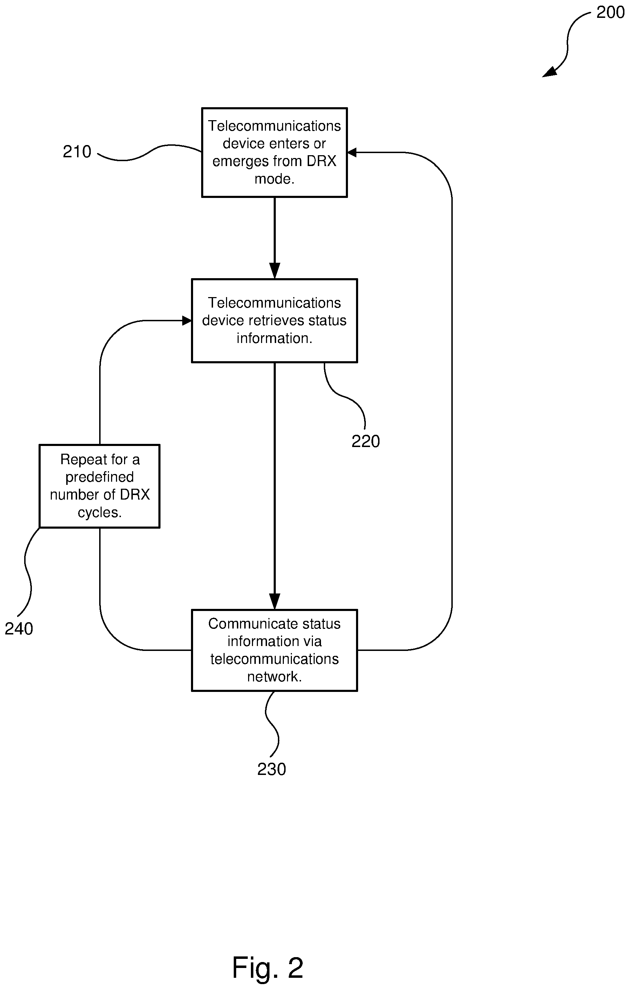

Figure 2 shows an overview of a method 200 of retrieving status information from a telecommunications device 110 via the network 100.

In a first step 210, a change in the DRX mode of the telecommunications device 110-1 (*e.g.* entering or emerging from the DRX mode) is triggered by the network 100 (in particular the RAN access point 120 serving the telecommunications device 110-1), and the telecommunications device 110-1 therefore effects an appropriate change to its DRX mode.

In response to the change in the DRX mode of the telecommunications device 110-1, in a next step 220, the telecommunications device 110-1 triggers retrieval of information regarding its status (herein "status information"). The status information is retrieved from the telecommunications device 110-1 and without interaction with the network 100.

For example, status information includes: a battery level reading; a reading from a sensor associated with a telecommunications device (e.g. temperature, state of an electronic switch, fluid pressure, *etc.);* and/or data stored in memory associated with a telecommunications device.

Once the status information has been retrieved by the telecommunications device 110-1, the telecommunications device 110-1 subsequently communicates the status information to the network 100 at step 230.

The communication of the status information from the telecommunications device 110-1 at stage 230 is available to be performed as follows:
- if the telecommunications device 110-1 is not in the DRX mode, the status information is communicated to the network 100 according to how the telecommunications device would communicate with the network 100 when not in the DRX mode; or
- if the telecommunications device is in the DRX mode, the status information is communicated to the network 100:
   o as part of signalling that facilitates configuration of the DRX mode between the telecommunications device 110-1 and its serving RAN access point 120, such as RRC protocol-compliant messages, and in particular by:
      ▪ using a field of a RRC protocol-compliant message contrary to its intended purpose, but where there is agreement between the telecommunications device 110-1 and the remainder of the network 100 (or part thereof) as to the adapted meaning of this field. For example a gateway number field is used to communicate battery level. In this way, this overcomes the limitation of the RRC protocol not otherwise being configured to communicate the status information;
      ▪ creating a new field in the RRC protocol for communicating the status information; or
   o once the telecommunications device has emerged from the DRX mode, status information is communicated as described above in relation to if the telecommunications device 110-1 is not in the DRX mode, in which case:
      ▪ the telecommunications device is available to initiate emergence from the DRX mode or to await to emerge from the DRX mode, and the telecommunications device is available to re-enter the DRX mode having communicated the status information.

The status information is received from the telecommunications device 110-1 by the RAN access points 120, then forwarded to the core network 125 and ultimately, at least, to the DMS 140. The DMS 140 stores and processes incoming status information thereby to aggregate data and/or manage telecommunications devices 110 (*e.g.* to perform remote operation and upgrading, as well as for forecasting and triggering site visits to a telecommunications device).

Advantageously, by incorporating the DMS 140 in the core network 125 battery consumption and network bandwidth usage may be reduced when compared to locating the DMS as part of a server that is remote from the network core 125.

Once the status information has been communicated to the network 100 (regardless of the manner in which this communication is performed), process 200 reiterates, either by:
- reiterating to step 210, upon a further change in the DRX mode of telecommunications device 110-1 in accordance with step 210; or
- reiterating to step 220, after a change in the DRX mode in the form of a predefined number of DRX cycles being completed 240 (whilst the telecommunications device 110-1 is in the DRX mode).

The parameters of the DRX mode are available to be configured by the network 100, and in particular a duration of the active and inactive states of the DRX cycle; this is performed by RRC protocol-compliant messages, such as: RRC Connection Setup; RRC Connection Reconfiguration; and RRC Connection Re-establishment messages.

In this way, the frequency with which a telecommunications device 110 retrieves and/or communicates its status information is effectively available to be configured by the network 100.

Accordingly, power consumption by the telecommunications device due to retrieving and communicating status information is therefore also centrally configurable by the network 100.

For example, where status information is in the form of battery level of the telecommunications device 110-1, it may be desirable to increase frequency with which status information is communicated to the network 100 towards the expected end of life of the telecommunications device and/or during winter months so as more accurately to predict remaining battery, and therefore better to forecast repair or replacement.

In another example, the telecommunications device 110-3 is a smart domestic natural gas meter and the status information includes a measure of gas usage. For greater accuracy (and to minimise the extent of over- or under-charging at a given point for the supply of gas), it may be desirable to report gas usage more frequently in winter months (when it is reasonable to expect higher gas usage) than in summer months. Accordingly, the frequency of retrieving and communicating the status information by the telecommunications device 110-3 is increased by reconfiguring the parameters of the DRX mode so as to decrease the DRX cycle period length, thereby more frequently to trigger status information retrieval and communication.

Advantageously, by using a network function *(i.e.* the DRX mode), there is provided a centralised network-implemented process of managing the retrieval and communication of status information from a telecommunications device 110. Furthermore, by using an existing network function that is complementary to the purpose of conserving battery power *(i.e.* the DRX mode), retrieval and communication of status information may be achieved in a more power-efficient manner (at least, from the perspective of a telecommunications device), than by incorporating an otherwise new function, such as a trigger based on a dedicated timer running (continuously) on a telecommunications device. A timer-based trigger may also cause reporting of outdated status information where a device is out of network coverage for a long period of time.

When a telecommunications device 110 is out of network coverage, it may be continually polling for a network to which to attach; this will drain battery power. Accordingly, a network-based trigger *(i.e.* the DRX mode) allows a telecommunications device to retrieve and/or communicate status information only when in network coverage, in this way the retrieved status information will therefore be up-to-date and polling for network coverage so as to communicate the retrieved status information may be avoided.

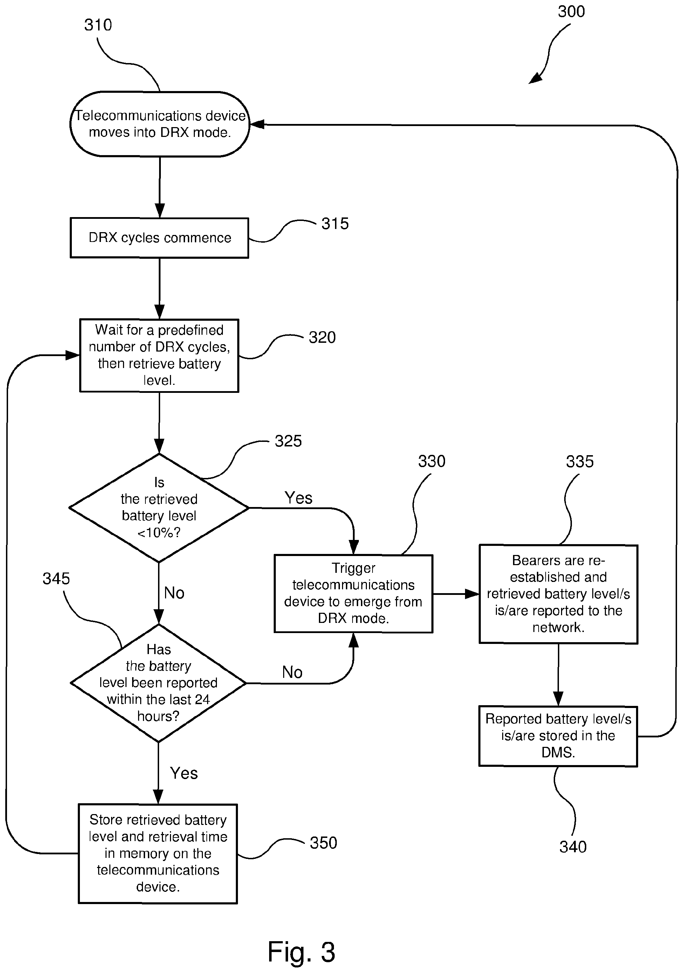

Figure 3 shows, in more detail, an exemplary process 300 of retrieving and communicating status information from a telecommunications device.

In the example of Figure 3, the telecommunications device 110-4 is a battery-powered parking space availability sensor. The status information includes a battery level of the telecommunications device 110-4, as well as the time at which the battery level was retrieved.

In a first step 310, the telecommunications device 110-4 enters the DRX mode, and the device subsequently commences a DRX cycle 315.

The telecommunications device 110-4 is configured to retrieve status information upon completing a pre-determined total number of DRX cycles since the telecommunications device most-recently entered the DRX mode 320 *(i.e.* since step 310); these total number of DRX cycles are counted by a counter incorporated as part of the telecommunications device 110-4.

In one example, the telecommunications devices 110 are configured only to communicate the status information to the network 100 if the status information is a pre-defined value or if it exceeds a pre-defined threshold value. In this way, power conservation may be improved, and this may be significant over the lifetime of a telecommunications device if the device must emerge out of the DRX mode to report its status information. In the example of Figure 3, the telecommunications device 110-4 is configured to communicate the retrieved battery level to the network if it determines that the retrieved battery level is less than 10%, as per step 325. In such an event, the network 100 triggers the telecommunications device to emerge from the DRX mode (*e.g.* by issuing an RRC Connect message) 330. Accordingly, the telecommunications device 110-4 re-establishes bearers with the network 100 at step 335 and then reports the battery level (and time of retrieval) to the network; this is then stored in the DMS 140 at step 340, and the process 300 reiterates from step 310.

In a further example, the telecommunications devices 110 are configured to override communicating status information to the network 100 if such reporting has already been performed within a predefined time period and/or number of DRX cycles; this helps prevent such communication occurring at too great a frequency. In the example of Figure 3, if the battery level of the telecommunications device 110-4 is equal to or greater than 10% (as determined at step 325), the device then queries whether the retrieved battery level has been reported to the network 100 within the last 24 hours in step 345. If so, the telecommunications device 110-4 stores the most recently retrieved battery level until a further iteration (or further iterations) of the process 300 from step 320 permit reporting, as per from step 330.

If, however, battery level has not been reported to the network within the last 24 hours (and the most recently retrieved battery level is greater than or equal to 10%), the process 300 continues from step 330.

In this way, the frequency with which status information is reported to the network may be limited (in this example to, at most, every 24 hours) when the value of the retrieved status information does not justify any greater frequency of reporting (in this example, when the battery level is greater than or equal to 10%).

In a further example, once the network 100 has received status information from a telecommunications device 110, the network is configured to respond to the telecommunications device 110 from which the status information originated. Issuance of a response, and the nature of the response, is dependent on the retrieved status information.

Such a response from the network 100 includes:
- an acknowledgement of valid receipt, the absence of which triggers re-communication of the (or further) status information;
- data, such as for the purposes of an update to software running on a telecommunications device 110;
- a command instructing the telecommunications device to perform:
   ∘ a power-down operation or to enter a low-power mode;
   ∘ a network operation, such as instructing a change in the DRX mode or to switch to a Low Power Wide Area Network connection;
   ∘ further retrieval and/or communication of status information;
   ∘ a software update or revision *(i.e.* performed 'over the air');
   ∘ a processing operation, such as retrieval or modification of data from memory on a telecommunications device;
   ∘ a reboot or reset; and/or
   ∘ a mechanical and/or electrical operation, such as operation of an actuator or energising an electrical components (*e.g.* a pump, light or fan).

In this way, updates and changes to the telecommunications devices 110 are available to be centrally administered via the network 100.

In an alternative example, the telecommunications device 110 is available to perform the aforementioned commands automatically, without the response from the network, and instead in response only to assessing (at the telecommunications device) whether the retrieved status information is equal to a predefined value or if it exceeds a predefined threshold value. According to this example, a telecommunications device enters a low power mode, without command from the network 100, if the telecommunications device determines that the retrieved battery level is less than 5%.

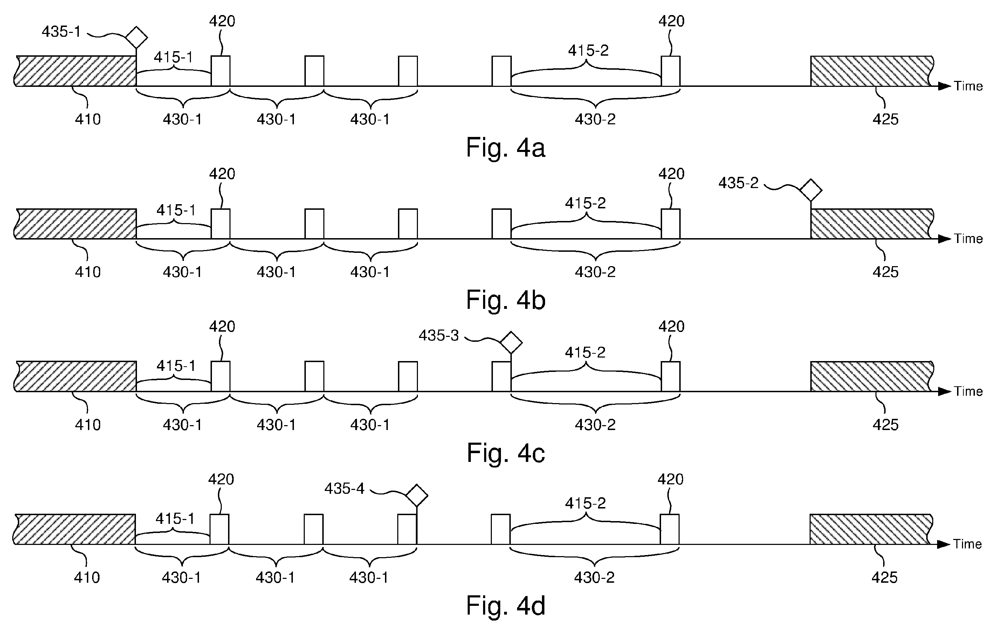

Figures 4 shows a timeline of DRX mode activity, and in particular triggers for retrieving and communicating status information from a telecommunications device 110 to the network 100 due to changes in such DRX mode activity.

In Figures 4a-4d, each block 410, 420, 425 represents an active state of the DRX mode for a given telecommunications device 110, the absence of such a block indicates an inactive state. In particular, Figures 4 illustrate:
- block 410 and block 425, which represent continuous active states (of unspecified duration), and therefore periods in which the telecommunications device is not in the DRX mode;
   ∘ termination of block 410 represents the commencement of the DRX mode; and
   ∘ commencement of block 425 represents the emergence from the DRX mode.
- an inactive state 415 followed by an active state of predefined duration 420, the pairing of which forms a DRX cycle, and in particular:
   ∘ a short inactive state 415-1 and the active state of predefined duration 420 forms a short DRX cycle 430-1; and
   ∘ a long inactive state 415-2 *(i.e.* being longer than the short inactive state 415-1) and the active state of predefined duration 420 forms a long DRX cycle 430-2.
- Markers 435 representing a trigger for the telecommunications device to retrieve and/or communicate status information to the network 100.

Figures 4 show the same sequence of changes in the DRX mode activity of a given telecommunications device, and each figure varies in the trigger for retrieving and/or reporting status information. In particular, the different triggers include when a telecommunications device 110:
- enters a DRX mode (*e.g.* by entering a first - short - DRX cycle 430-1), as per trigger 435-1 and as shown in Figure 4a;
- emerges from a DRX mode (*e.g.* by entering a continuous activity state 425), as per trigger 435-2 and as shown in Figure 4b;
- preforms a reconfiguration of the DRX mode from a short DRX cycle 430-1 to a long DRX cycle 430-2, as per trigger 435-3 and as shown in Figure 4c, or *vice versa;* and
- completes a predetermined number of DRX cycles (*e.g.* a third short DRX cycle 430-1), as per trigger 435-4 and as shown in Figure 4d.

Any of the aforementioned triggers 435 are available to be combined, for example so that status information is retrieved both when entering and emerging from the DRX mode.

In one example, a telecommunications device 110 communicates with the network 100 so as to update status information and/or to retrieve status information from the network; such operations by the telecommunications device 110 are available to be queued (in a network server and/or on the telecommunications device 110), for the duration that the telecommunications device is connected to the network; Open Mobile Alliance standards such as Lightweight M2M are appropriate for use in this regard.

### Alternative and Modifications

In the aforementioned, the network 100 is generally shown and described as a cellular wide area network in accordance with 5G technology. However, in one alternative the network 100 is any kind of wireless telecommunications network, including a cellular wide area network based on: 5G technology; Long Range Wide Area Network (LoRWAN); a Low Power Wide Area Network (LPWAN); a satellite-enabled telecommunications network; a wireless local area network; or a combination of any wireless networks.

In one example, different changes to the DRX mode of a telecommunications device 110 trigger retrieval and/or communicating of different status information from the same telecommunications device, for example a different trigger is provided for retrieving and communicating battery level to that for a reading from a sensor.

In the aforementioned, reference is made throughout to a DRX mode. However, alternative forms of discontinuous reception modes are available to be used within the spirit of the invention, such as: polling (in the case of wireless local area networks); Power Save Mode (for example, as described in 3GPP Technical Specification 24.301, version 15.5.0, section 5.3.11, the contents of which are herein incorporated by reference); and extended DRX (eDRX). Furthermore, the aforementioned examples are also available to operate in accordance with publish-subscribe messaging patterns and with push notifications.

In one example, RRC protocol-compliant messages are used to synchronise time between the telecommunications devices 110 and the remainder of the network 100, therefore achieving synchronisation in a power-efficient and centralised manner.

Reference numerals appearing in the claims are by way of illustration only and shall have no limiting effect on the scope of the claims.

## Claims

1. A method of retrieving status information from a telecommunications device (110) via a wireless telecommunications network (100), said telecommunications device comprising a sensor, the method comprising the steps of:
detecting, at the telecommunications device, a change in discontinuous reception of the telecommunications device (210); and
the telecommunications device retrieving status information (220), wherein said status information is a reading from the sensor and wherein the status information is retrieved without interaction with the wireless telecommunications network and/or a telecommunications network; and
**characterised in that**:
in response to the telecommunications device detecting the change in discontinuous reception, the telecommunications device communicating the retrieved status information to the wireless telecommunications network (230).

2. A method according to Claim 1, wherein the step of retrieving status information (220) is performed in response to detecting the change in discontinuous reception.

3. A method according to Claim 1 or 2, wherein the change in discontinuous reception is initiation of discontinuous reception.

4. A method according to any preceding claim, wherein the change in discontinuous reception is: cessation of discontinuous reception; completion of a predefined number of discontinuous reception cycles; a reconfiguration of the discontinuous reception; and/or performed at a predefined frequency.

5. A method according to any preceding claim, wherein communicating the retrieved status information (230) is performed on every occasion of the change in discontinuous reception.

6. A method according to any preceding claim, wherein the retrieved status information is communicated to the wireless telecommunications network (100) in dependence on a comparison of the retrieved status information to a predefined value.

7. A method according to any preceding claim, further comprising the step of preventing the telecommunications device (110) from retrieving the status information and/or communicating the retrieved status information to the wireless telecommunications network (100) if status information has previously been communicated by the telecommunications device to the wireless telecommunications network within a predefined time window.

8. A method according to any preceding claim, wherein the retrieved status information is communicated to the wireless telecommunications network (100) whilst the telecommunications device (110) is in discontinuous reception or whilst the telecommunications device has ceased discontinuous reception.

9. A method according to any preceding claim, further comprising the step of the telecommunications device performing an operation if the retrieved status information is equal to, less than or greater than a predefined value.

10. A method according to any preceding claim, further comprising the step of communicating data from the wireless telecommunications network (100) and/or a telecommunication network to the telecommunications device in response to the wireless telecommunications network receiving the retrieved status information.

11. A method according to Claim 10, wherein the data is an instruction, and wherein the instruction is to: trigger a further change in discontinuous reception; power down the telecommunications device; perform a software update; reconfigure the telecommunications device and/or change an operating parameter of the telecommunications device; perform further retrieval of status information from the telecommunications device; and/or perform a mechanical and/or electrical operation.

12. A telecommunications device (110), comprising:
a transceiver for communicating with a wireless telecommunications network (100);
a sensor;
a controller configured to:
detect a change in discontinuous reception of the telecommunications device (210); and
retrieve status information from the sensor, wherein said status information is a reading from the sensor (220) and wherein the status information is retrieved without interaction with the wireless telecommunications network and/or a telecommunications network; and
**characterised in that** the controller is further configured to:
in response to detecting the change in discontinuous reception, communicate, by means of the transceiver, the retrieved status information to the wireless telecommunications network (230).

13. A system for retrieving status information in relation to a telecommunications device, comprising:
a wireless telecommunications network (100);
a telecommunications device (110) according to Claim 12.

14. A computer-readable storage medium comprising instructions that, when executed by a processor associated with a telecommunications device, causes the telecommunications device to perform the method according to any of Claims 1 to 11.

## Patentansprüche

1. Verfahren zum Abrufen von Statusinformationen von einer Telekommunikationsvorrichtung (110) über ein drahtloses Telekommunikationsnetz (100), wobei die Telekommunikationsvorrichtung einen Sensor umfasst, wobei das Verfahren die folgenden Schritte umfasst:
Detektieren, an der Telekommunikationsvorrichtung, einer Änderung im diskontinuierlichen Empfang der Telekommunikationsvorrichtung (210); und
wobei die Telekommunikationsvorrichtung Statusinformationen abruft (220), wobei die Statusinformationen vom Sensor gelesen werden, und wobei die Statusinformationen ohne Interaktion mit dem drahtlosen Telekommunikationsnetz und/oder einem Telekommunikationsnetz abgerufen werden; und
**dadurch gekennzeichnet, dass**:
als Reaktion darauf, dass die Telekommunikationsvorrichtung die Änderung im diskontinuierlichen Empfang detektiert, die Telekommunikationsvorrichtung die abgerufenen Statusinformationen an das drahtlose Telekommunikationsnetz kommuniziert (230).

2. Verfahren nach Anspruch 1, wobei der Schritt zum Abrufen von Statusinformationen (220) als Reaktion auf das Detektieren der Änderung im diskontinuierlichen Empfang durchgeführt wird.

3. Verfahren nach Anspruch 1 oder 2, wobei es sich bei der Änderung im diskontinuierlichen Empfang um eine Initiierung des diskontinuierlichen Empfangs handelt.

4. Verfahren nach einem vorstehenden Anspruch, wobei es sich bei der Änderung im diskontinuierlichen Empfang um Folgendes handelt: Beendigung des diskontinuierlichen Empfangs; Abschluss einer vordefinierten Anzahl von diskontinuierlichen Empfangszyklen; eine Rekonfiguration des diskontinuierlichen Empfangs; und/oder mit einer vordefinierten Frequenz durchgeführt.

5. Verfahren nach einem vorstehenden Anspruch, wobei das Kommunizieren der abgerufenen Statusinformationen (230) bei jedem Auftreten der Änderung im diskontinuierlichen Empfang durchgeführt wird.

6. Verfahren nach einem vorstehenden Anspruch, wobei die abgerufenen Statusinformationen an das drahtlose Telekommunikationsnetz (100) in Abhängigkeit von einem Vergleich der abgerufenen Statusinformationen mit einem vordefinierten Wert kommuniziert werden.

7. Verfahren nach einem vorstehenden Anspruch, ferner umfassend den Schritt zum Verhindern, dass die Telekommunikationsvorrichtung (110) die Statusinformationen abruft und/oder die abgerufenen Statusinformationen an das drahtlose Telekommunikationsnetz (100) kommuniziert, falls Statusinformationen zuvor durch die Telekommunikationsvorrichtung an das drahtlose Telekommunikationsnetz innerhalb eines vordefinierten Zeitfensters kommuniziert wurden.

8. Verfahren nach einem vorstehenden Anspruch, wobei die abgerufenen Statusinformationen an das drahtlose Telekommunikationsnetz (100) kommuniziert werden, während sich die Telekommunikationsvorrichtung (110) im diskontinuierlichen Empfang befindet oder während die Telekommunikationsvorrichtung den diskontinuierlichen Empfang beendet hat.

9. Verfahren nach einem vorstehenden Anspruch, ferner umfassend den Schritt, dass die Telekommunikationsvorrichtung eine Operation durchführt, falls die abgerufenen Statusinformationen gleich, kleiner als oder größer als ein vordefinierter Wert sind.

10. Verfahren nach einem vorstehenden Anspruch, ferner umfassend den Schritt zum Kommunizieren von Daten vom drahtlosen Telekommunikationsnetz (100) und/oder einem Telekommunikationsnetz an die Telekommunikationsvorrichtung als Reaktion darauf, dass das drahtlose Telekommunikationsnetz die abgerufenen Statusinformationen empfängt.

11. Verfahren nach Anspruch 10, wobei es sich bei den Daten um eine Anweisung handelt, und wobei die Anweisung für Folgendes dient: Auslösen einer weiteren Änderung im diskontinuierlichen Empfang; Abschalten der Telekommunikationsvorrichtung; Durchführen einer Softwareaktualisierung; Rekonfigurieren der Telekommunikationsvorrichtung und/oder Ändern eines Betriebsparameters der Telekommunikationsvorrichtung; Durchführen eines weiteren Abrufs von Statusinformationen von der Telekommunikationsvorrichtung; und/oder Durchführen eines mechanischen und/oder elektrischen Vorgangs.

12. Telekommunikationsvorrichtung (110), umfassend:
einen Sendeempfänger zum Kommunizieren mit einem drahtlosen Telekommunikationsnetz (100);
einen Sensor;
eine Steuerung, die ausgelegt ist zum:
Detektieren einer Änderung im diskontinuierlichen Empfang der Telekommunikationsvorrichtung (210); und
Abrufen von Statusinformationen vom Sensor, wobei die Statusinformationen vom Sensor gelesen werden (220), und
wobei die Statusinformationen ohne Interaktion mit dem drahtlosen Telekommunikationsnetz und/oder einem Telekommunikationsnetz abgerufen werden; und
**dadurch gekennzeichnet, dass** die Steuerung ferner ausgelegt ist zum:
als Reaktion auf das Detektieren der Änderung im diskontinuierlichen Empfang, Kommunizieren, mittels des Sendeempfängers, der abgerufenen Statusinformationen an das drahtlose Telekommunikationsnetz (230).

13. System zum Abrufen von Statusinformationen bezüglich einer Telekommunikationsvorrichtung, umfassend:
ein drahtloses Telekommunikationsnetz (100);
eine Telekommunikationsvorrichtung (110) nach Anspruch 12.

14. Computerlesbares Speichermedium, das Anweisungen umfasst, die bei Ausführung durch einen Prozessor, der mit einer Telekommunikationsvorrichtung assoziiert ist, die Telekommunikationsvorrichtung veranlassen, das Verfahren nach einem der Ansprüche 1 bis 11 durchzuführen.

## Revendications

1. Procédé de récupération d'informations d'état auprès d'un dispositif de télécommunication (110) par l'intermédiaire d'un réseau de télécommunication sans fil (100), ledit dispositif de télécommunication comprenant un capteur, le procédé comprenant les étapes suivantes :
détecter, au niveau du dispositif de télécommunication, un changement dans la réception discontinue du dispositif de télécommunication (210) ; et
récupérer, par le dispositif de télécommunication, des informations d'état (220), lesdites informations d'état étant un relevé du capteur et les informations d'état étant récupérées sans interaction avec le réseau de télécommunication sans fil et/ou un réseau de télécommunication ; et
**caractérisé en ce que** :
en réponse à la détection par le dispositif de télécommunication du changement dans la réception discontinue, communiquer, par le dispositif de télécommunication, les informations d'état récupérées au réseau de télécommunication sans fil (230).

2. Procédé selon la revendication 1, dans lequel l'étape de récupération d'informations d'état (220) est effectuée en réponse à la détection du changement dans la réception discontinue.

3. Procédé selon la revendication 1 ou la revendication 2, dans lequel le changement dans la réception discontinue consiste en l'initiation de la réception discontinue.

4. Procédé selon l'une quelconque des revendications précédentes, dans lequel le changement dans la réception discontinue est : l'arrêt de la réception discontinue ; l'achèvement d'un nombre prédéfini de cycles de réception discontinue ; une reconfiguration de la réception discontinue ; et/ou réalisée à une fréquence prédéfinie.

5. Procédé selon l'une quelconque des revendications précédentes, dans lequel la communication des informations d'état récupérées (230) est effectuée à chaque occasion de la modification de la réception discontinue.

6. Procédé selon l'une quelconque des revendications précédentes, dans lequel les informations d'état récupérées sont communiquées au réseau de télécommunication sans fil (100) en fonction d'une comparaison des informations d'état récupérées avec une valeur prédéfinie.

7. Procédé selon l'une quelconque des revendications précédentes, comprenant en outre l'étape comprenant d'empêcher le dispositif de télécommunication (110) de récupérer les informations d'état et/ou de communiquer les informations d'état récupérées au réseau de télécommunication sans fil (100) si des informations d'état ont été précédemment communiquées par le dispositif de télécommunication au réseau de télécommunication sans fil dans une fenêtre temporelle prédéfinie.

8. Procédé selon l'une quelconque des revendications précédentes, dans lequel les informations d'état récupérées sont communiquées au réseau de télécommunication sans fil (100) tandis que le dispositif de télécommunication (110) est en réception discontinue ou tandis que le dispositif de télécommunication a cessé la réception discontinue.

9. Procédé selon l'une quelconque des revendications précédentes, comprenant en outre l'étape comprenant que le dispositif de télécommunication effectue une opération si les informations d'état récupérées sont égales, inférieures ou supérieures à une valeur prédéfinie.

10. Procédé selon l'une quelconque des revendications précédentes, comprenant en outre l'étape comprenant à communiquer des données du réseau de télécommunication sans fil (100) et/ou d'un réseau de télécommunication au dispositif de télécommunication en réponse à la réception, par le réseau de télécommunication sans fil, des informations d'état récupérées.

11. Procédé selon la revendication 10, dans lequel les données sont une instruction, et dans lequel l'instruction comprend de : déclencher un autre changement dans la réception discontinue ; mettre hors tension le dispositif de télécommunication ; effectuer une mise à jour du logiciel ; reconfigurer le dispositif de télécommunication et/ou modifier un paramètre de fonctionnement du dispositif de télécommunication ; effectuer une autre récupération des informations d'état auprès du dispositif de télécommunication ; et/ou effectuer une opération mécanique et/ou électrique.

12. Dispositif de télécommunication (110) comprenant :
un émetteur-récepteur pour communiquer avec un réseau de télécommunication sans fil (100) ;
un capteur ;
un contrôleur configuré pour :
détecter un changement dans la réception discontinue du dispositif de télécommunication (210) ; et
récupérer des informations d'état auprès du capteur, lesdites informations d'état étant un relevé du capteur (220), et les informations d'état étant récupérées sans interaction avec le réseau de télécommunication sans fil et/ou un réseau de télécommunication ; et
**caractérisé par le fait que** le contrôleur est en outre configuré pour :
en réponse à la détection du changement dans la réception discontinue, communiquer, au moyen de l'émetteur-récepteur, les informations d'état récupérées au réseau de télécommunication sans fil (230).

13. Système de récupération d'informations d'état en relation avec un dispositif de télécommunication, le système comprenant :
un réseau de télécommunication sans fil (100) ;
un dispositif de télécommunication (110) selon la revendication 12.

14. Support de stockage lisible par ordinateur comprenant des instructions qui, lorsqu'elles sont exécutées par un processeur associé à un dispositif de télécommunication, amènent le dispositif de télécommunication à exécuter le procédé selon l'une quelconque des revendications 1 à 11.
